# EUROPEAN PATENT APPLICATION

(11) **EP 3 477 118 A1**
(43) Date of publication of application: **01.05.2019**
(21) Application number: 18203228.4
(22) Date of filing: 29.10.2018
(51) Int. Cl.: F04D 29/26, F04D 29/02, F01D 5/02, F04D 29/28

(54) **POLYMERIC COMPRESSOR WHEEL ASSEMBLY**

(30) Priority: 31.10.2017 US 201762579421 P
(71) Applicant: Borgwarner Inc., Auburn Hills, Michigan 48326 (US)
(72) Inventor: GANNON, Kathryn Elisabeth, Milnrow, Rochdale, Lancashire OL16 4AY (GB); TERRY, Anthony Charles, Halifax, West Yorkshire HX6 4QU (GB); BURGESS, Mark William, Woodhall Spa, Lincolnshire LN10 6PJ (GB)
(74) Representative: Peterreins Schley

(57) **Abstract**

A compressor wheel assembly (200) includes a compressor wheel (140) and a coupling member (230). The compressor wheel (140) is formed of a polymeric material. The compressor wheel (140) includes a hub (202), blades (204) extending from a forward surface (210) of the hub (202), and a shaft coupling portion (206) extending axially rearward from a rearward surface of the hub (202). The shaft coupling portion (206) includes a bore (208) extending therethrough and having a polygonal cross-sectional configuration. The coupling member (230) includes a head (232) and a body (234) extending axially from the head (232). The head (232) is received against a forward end (216) of the compressor wheel (140) and the body (234) extends through the bore (208). The body (234) has another polygonal cross-sectional configuration for transferring torque from the coupling member (23) to the compressor wheel (140).

## Description

### CROSS-REFERENCE TO RELATED PATENT APPLICATION

The present application claims the benefit of priority to U.S. Provisional Patent Application No. 62,579,421, filed on October 31, 2017 and the contents of which are incorporated herein by reference in its entirety.

### TECHNICAL FIELD

This disclosure relates to compressor wheels, and more particularly, to a system and method for compressor wheel retention using a squared nut.

### BACKGROUND

Turbochargers are forced-induction devices that are utilized to increase the pressure of the intake air provided to an engine. A compressor wheel is attached to a shaft, which is rotated, for example, by an electric motor, exhaust gas from the engine, or both. The compressor wheel, thereby, pressurizes ambient intake air and supplies pressurized intake air to the engine. By pressurizing the intake air, the engine may have increased power output compared to an otherwise comparable a naturally-aspirated engine.

Compressor wheels are typically made of metal materials, such as aluminum. Compressor wheels may, alternatively, be made of polymeric materials that made provide various advantages (e.g., lower moment of inertia, different manufacturing methods).

### SUMMARY

Disclosed herein are aspects, features, elements, implementations, and embodiments of compressor wheels and, in particular, polymeric compressor wheels and compressor wheel assemblies comprising the same.

A compressor wheel assembly includes a compressor wheel and a coupling member. The compressor wheel is formed of a polymeric material. The compressor wheel includes a hub, blades extending from a forward surface of the hub, and a shaft coupling portion extending axially rearward from a rearward surface of the hub. The shaft coupling portion includes a bore extending therethrough and having a polygonal cross-sectional configuration. The coupling member includes a head and a body extending axially from the head. The head is received against a forward end of the compressor wheel and the body extends through the bore. The body has another polygonal cross-sectional configuration for transferring torque from the coupling member to the compressor wheel.

The compressor wheel assembly may further include a shaft. The body of the coupling member includes a hollow interior. The shaft includes a forward portion that is threadably received in the hollow interior to couple the shaft to the coupling member and transfer torque thereto as the shaft is rotated by a drive source.

The compressor wheel assembly may further include a collar disposed around and engaging the shaft coupling portion. The collar is formed of a material that is stiffer than the polymeric material.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 generally illustrates a perspective partial cross-section view of a turbocharger according to the principles of the present disclosure.
FIG. 2 generally illustrates a perspective view of a compressor wheel assembly according to the principles of the present disclosure.
FIG. 3 generally illustrates a perspective cross-section of an exploded view of a compressor wheel assembly according to the principles of the present disclosure.
FIG. 4 generally illustrates a perspective cross-section of a compressor wheel assembly according to the principles of the present disclosure.
FIG. 5 generally illustrates a perspective cross-section of a compressor wheel assembly including a collar according to the principles of the present disclosure.

### DETAILED DESCRIPTION

Disclosed herein are embodiments of a compressor wheel and a compressor wheel assembly, which may be used in a turbocharger. The compressor wheel is formed of a polymeric material and is connected to a shaft with a coupling member to, thereby, form a compressor wheel assembly. More particularly, the compressor wheel includes a central bore in which is received the coupling member, which is in turn coupled to the shaft. The central bore and the coupling member have complementary polygonal cross-sectional shapes that allow torque transfer therebetween. The central bore and the coupling member may also have complementary axial lengths, and the coupling member and the shaft may include opposing surfaces, which cooperatively allow the compressor wheel to be held axially therebetween. These and further aspects of the compressor wheel and the compressor wheel assembly disclosed herein are discussed in further detail below.

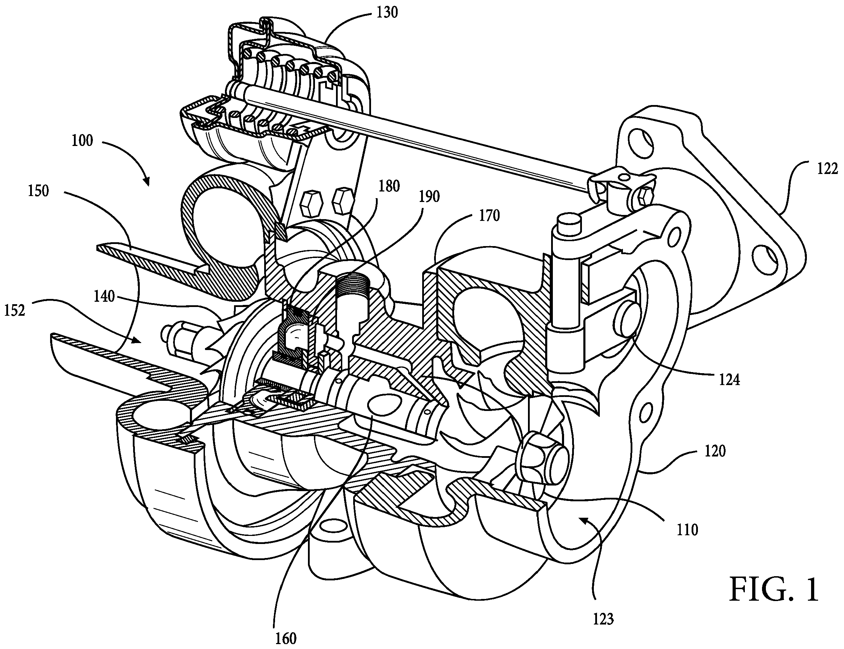

FIG. 1 generally illustrates a perspective partial cross-section view of a turbocharger 100 according to the principles of the present disclosure. The turbocharger 100 is an exhaust-gas driven forced induction device that is utilized in conjunction with an internal combustion engine (not shown). The turbocharger 100 includes a turbine wheel 110. The turbine wheel 110 is located in a turbine housing 120. The turbine housing 120 includes an exhaust gas inlet 122 for receiving exhaust gas from the internal combustion engine. Exhaust gases are routed from the exhaust gas inlet 122 to the turbine wheel 110 before exiting the turbine housing 120 at an exhaust gas outlet 123. A wastegate 124 may be mounted in the turbine housing 120 to allow some or all of the exhaust gas to bypass the turbine wheel 110. The wastegate 124 is movable between an open position and a closed position by an electric linear actuator 130.

The turbocharger includes a compressor wheel assembly including a compressor wheel 140. The compressor wheel 140 is located in a compressor housing 150. The compressor housing 150 includes an air inlet 152 and a volute in communication with an air outlet (not shown). Intake air is routed from the air inlet 152 to the compressor wheel 140, where the intake air is pressurized by rotation of the compressor wheel 140. The compressed air enters the volute and then exits the compressor housing 150 via the air outlet to be supplied to the internal combustion engine.

Rotation of the compressor wheel 140 is driven by rotation of the turbine wheel 110. In particular, the turbine wheel 110 and the compressor wheel 140 are each connected to a shaft 160. The shaft 160 can be a substantially rigid member, and each of the turbine wheel 110 and the compressor wheel 140 can be connected to the shaft 160 in a manner that prevents rotation of the turbine wheel 110 and the compressor wheel 140 with respect to the shaft 160. As a result, the compressor wheel 140 can rotate in unison with the turbine wheel 110 in response to rotation of the turbine wheel 110.

The shaft 160 is supported within a bearing housing 170 such that it is able to rotate freely with respect to the bearing housing 170 at a high rotational speed. The bearing housing 170, the turbine housing 120, and the compressor housing 150 are all arranged along an axis of rotation of the shaft 160. In particular, the bearing housing 170 is positioned between the turbine housing 120 and the compressor housing 150, with a first end of the bearing housing 170 being connected to the turbine housing 120 and a second end of the bearing housing 170 being connected to the compressor housing 150. The bearing housing 170 can incorporate lubrication and/or cooling features.

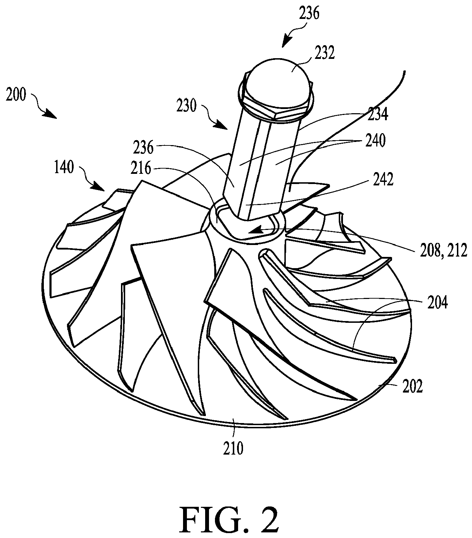

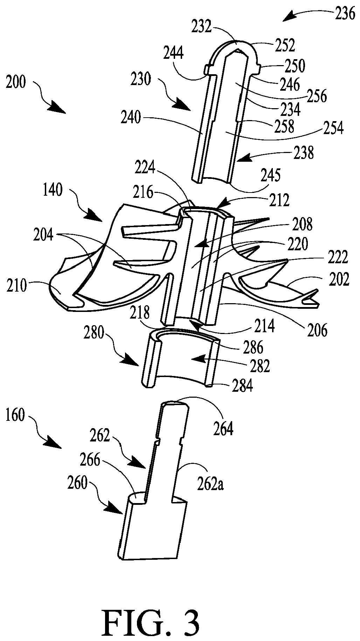

FIGS. 2 -5 generally illustrate a compressor wheel assembly 200 according to the principles of the present disclosure. The compressor wheel assembly 200 may be associated with a turbocharger, such as the turbocharger 100 of FIG. 1, or another forced induction device (e.g., driven by the exhaust, an electric motor, and/or another suitable drive source).

The compressor wheel assembly 200 generally includes a compressor wheel 140 (e.g., that shown in FIG. 1), the shaft 160, and a coupling member 230 that is adapted to secure the compressor wheel 140 to the shaft 160.

The compressor wheel 140 is formed a polymeric material, such as glass-filled nylon, plastic, or may comprise other suitable materials. The compressor wheel 140 may, for example, be injection molded. The compressor wheel 140 may also be referred to as a polymeric compressor wheel.

The compressor wheel 140 generally includes a hub 202, blades 204, and a shaft coupling portion 206 having a bore 208 extending axially therethrough. Moving from an inducer end of the compressor wheel 140 (e.g., near the air inlet 152) to an exducer end (e.g., near the volute), the hub 202 widens with an outer surface 210 (e.g., forward surface) that is convex in cross-section (e.g., moving from a near vertical surface to a near horizontal surface). The hub 202 may, for example, have generally constant wall thickness, which may be advantageous for manufacturing (e.g., injection molding).

The blades 204 are generally configured to draw ambient air into the compressor housing 150, compress the air, and expel compressed air to the volute for supply to the engine. The blades 204 disposed on the outer surface 210 of the hub 202 and extend away (e.g., radially and/or axially) therefrom. The blades 204 may be identical or substantially identical to one another. For example, each of the blades 204 may comprise identical or substantially identical shapes and dimensions. Alternatively, the blades 204 may have different shape and/or sizes (e.g., larger and smaller blades). The blades 204 are formed integrally with the hub 202, for example, during the injection molding process.

The shaft coupling portion 206 extends axially rearward from an inner surface (not labeled; e.g., rearward surface) of the hub 202. The shaft coupling portion 206 is, for example, formed as a protrusion that extends axially rearward (i.e., away from an inducer end of the compressor wheel 140). Moving rearward, the shaft coupling portion 206 is spaced apart radially from the inner surface of the hub 202 at increasing distances. The shaft coupling portion 206 includes the bore 208 extending axially therethrough, which, as discussed in further detail below, allows receipt of the coupling member 230 for coupling the compressor wheel 140 to the shaft 160. The shaft coupling portion 206 is parallel (e.g., concentric) with the shaft 160 when coupled thereto. While shown as being generally cylindrical, the shaft coupling portion 206 may have different configurations (e.g., having a non-circular cross-sectional shape and/or having different cross-sectional shapes and/or sizes moving axially therealong). The shaft coupling portion 206 is formed integrally with the hub 202, for example, during the injection molding process.

The bore 208 and the coupling member 230 are cooperatively configured to couple the compressor wheel 140 to the shaft 160 and to transfer torque therebetween. More particularly, the bore 208 and the coupling member 230 have complementary cross-sectional shapes, which allow receipt of the coupling member 230 axially into the bore 208 and which transfer force between engaging surfaces thereof.

The bore 208 extends axially entirely through the compressor wheel 140, so as to have a forward opening 212 and a rearward opening 214. The forward opening 212 of the bore 208 is positioned at a forward end 216 (e.g., first or inducer end) of the compressor wheel 140), which may form a planar surface extending radially inward from the outer surface 210 of the hub 202. The rearward opening 214 of the bore 208 is positioned at a rearward end 218 of the shaft coupling portion 206. The rearward end 218 of the shaft coupling portion 206 may also form a planar surface. The bore 208 includes a polygonal cross-sectional configuration (e.g., shape), such as a rectangular cross-sectional configuration (e.g., square, as shown). That is, the bore 208 has an inner periphery having interior surfaces 220 (e.g., straight or planar interior surfaces) that form the cross-sectional configuration. In some embodiments, the bore 208 may include other cross-sectional configurations, such as, a triangular cross-sectional configuration, a pentagonal cross-sectional configuration, a hexagonal cross-sectional configuration, an octagonal cross-sectional configuration, or other suitable cross-sectional configuration.

The polygonal cross-sectional configuration may additionally include curved surfaces 222 (e.g., fillets, filleted surfaces, or interior curved surfaces) that extend (e.g., transition) between the interior surfaces 220 that are straight and form the polygonal shape (e.g., rectangle or square). As exterior surfaces of coupling member 230 engage the interior surfaces defining the bore 208, stress may form in the polymeric material forming the shaft coupling portion 206 and may be concentrated near intersections between adjacent straight surfaces that form the polygonal cross-sectional shape of the bore 208. The curved surfaces 222 extending between the interior surfaces 220, which are straight, may reduce such stress concentrations.

The cross-sectional configuration of the bore 208 may be constant extending from the forward opening 212 to the rearward opening 214. The bore 208 may also widen in regions adjacent the forward opening 212 and/or the rearward opening 214 of the bore 208. For example, the bore 208 may include a tapered surface 224 that extends axially and radially between the interior surfaces 220, as well as the curved surfaces 222, to the planar surface of the forward end 216 of the hub 202. The tapered surface 224 may, as shown, be chamfered, or may alternatively be curved (e.g., filleted) or stepped.

The bore 208 is adapted to receive the coupling member 230. The coupling member 230 may also be referred to as a nut, a retaining nut, or an insert. The coupling member 230 is adapted to retain the compressor wheel 140 on the shaft 160 to form the compressor wheel assembly 200. The coupling member 230 may, for example, be formed of a metal, plastic, or other suitable material. In some embodiments, the material forming the coupling member 230 may be relatively strong (e.g., stiffer) as compared to the polymeric material of the compressor wheel 140. In this manner, the coupling member 230, when transferring torque from the shaft 160 to the compressor wheel 140, may withstand larger forces at radially inward locations where engaging the shaft 160 (as discussed in further detail below) than the polymeric material of the shaft coupling portion 206 of the compressor wheel 140 withstands at radially outward locations.

The coupling member 230 generally includes a head portion 232 and an elongated body portion 234 that extends axially rearward from the head portion 232 (e.g., from a forward end 236 of the coupling member 230 to a rearward end 238 of coupling member 230). The head portion 232 may also be referred to as a head, while the elongated body portion 234 may also be referred to as a body, a hollow body, or a body portion.

The elongated body portion 234 has a polygonal cross-sectional configuration that corresponds to the cross-sectional configuration of the bore 208, which facilitates receipt of the coupling member 230 by the bore 208 and torque transfer therebetween. That is, the elongated body portion 234 has an outer periphery having exterior surfaces 240 (e.g., straight or planar exterior surfaces) that form the cross-sectional configuration. For example, the elongated body portion 234 includes rectangular cross-sectional configuration (e.g., square), while the bore 208 includes a rectangular cross-sectional configuration. The body portion 234 may include other cross-sectional configurations, such as, a triangular cross-sectional configuration, a pentagonal cross-sectional configuration, a hexagonal cross-sectional configuration, an octagonal cross-sectional configuration, or other suitable cross-sectional configuration.

The polygonal cross-sectional configuration of the body portion 234 may additionally include curved surfaces 242 (e.g., fillets, filleted surfaces, or exterior curved surfaces) that extend (e.g., transition) between the exterior surfaces 240 that are straight and form the polygonal shape (e.g., rectangle or square). As the interior surfaces 220 of the bore 208 are engaged by the exterior surfaces 240, stress may form in the polymeric material forming the shaft coupling portion 206 and may be concentrated where edges of the straight exterior surfaces 240 of the body portion 234 engage the interior surface 220. The curved surfaces 242 extending between the exterior surfaces 240 may reduce such stress concentrations by applying force to the interior surfaces 220 of the bore 208 over wider areas.

The cross-sectional configuration of the body portion 234 may be constant extending from the head portion 232 to the rearward end 238 of the coupling member 230. The body portion 234 may also widen adjacent the head portion 232, for example, by forming a tapered surface 246 (e.g., chamfered, filleted, or stepped) that extends axially and radially between the exterior surfaces 240, as well as the curved surfaces 242, to a planar rear surface 244 of the head portion 232.

The coupling member 230 is adapted to be received by the bore 208 of the compressor wheel 140. More particularly, the body portion 234 extends into and/or through the bore 208 of the compressor wheel 140. The cross-sectional configuration of the body portion 234 is adapted to mate with the cross-sectional configuration of the bore 208. For example, the cross-sectional configuration of the body portion 234 has the same shape (e.g., rectangular, such as square) and is slightly smaller than the cross-sectional configuration of the bore 208, such that the body portion 234 can be inserted into the bore 208. Alternatively, the body portion 234 may have the same or slightly larger size, such that the body portion 234 is press fit into the bore 208, such that the body portion 234 is radially compressed by the shaft coupling portion 206 of the compressor wheel 140 surrounding and engaging the body portion 234. When the elongated body portion 234 is received by the bore 208, the exterior surfaces 240 and the curved surfaces 242 engage the interior surfaces 220 and/or the curved surfaces 222 of the bore 208 to apply force thereto and, thereby, transfer torque from the coupling member 230 to the compressor wheel 140.

The head portion 232 of the coupling member 230 is disposed at the forward end 236 of the coupling member 230. The head portion 232 is received against the forward end 216 of the compressor wheel 140.

The head portion 232 is adapted to be engaged by an operator, a tool, or other suitable engaging mechanism in order to insert the coupling member 230 into the bore 208 of the compressor wheel 140. The head portion 232 may further facilitate connecting the coupling member 230 to the shaft 160. For example, the head portion 232 may, for example, have an outer periphery 250 (e.g., hexagonal) configured to be engaged by the operator, tool, or other suitable engaging mechanism for applying torque thereto for threaded engagement of the coupling member 230 to the shaft 160.

The head portion 232 may further include an outer surface 252 that is tapered (e.g., rounded, such as hemispherical, as shown) to improve aerodynamic flow of air over the inducer end of the compressor wheel assembly 200 (e.g., as opposed to having a central planar surface).

The coupling member 230 is adapted to receive a portion of the shaft 160 to connect thereto. For example, the coupling member 230 may be internally threaded, while the shaft 160 is externally threaded, such that the shaft 160 is threadably received by the coupling member 230. This threaded engagement allows torque to be transferred form the shaft 160 to the coupling member 230 and, thereby, to the compressor wheel 140.

The coupling member 230 may include a hollow interior having a first portion 254 and a second portion 256. The first portion 254 extends axially forward from the rearward end 238 of the coupling member 230 to the second portion 256. The second portion 256 extends axially forward from the first portion 254 into the head portion 232 of the coupling member 230. In some embodiments, the first portion 254 includes an interior profile (e.g., cross-sectional shape, such as a diameter) that is larger than an interior profile associated of the second portion 256. For example, the second portion 256 may be internally threaded with the threads protruding radially inward relative to an interior surface (e.g., cylindrical or unthreaded surface) of the first portion 254. A shoulder surface 258 may also extend radially outward from the interior surface of the first portion 254 to the second portion 256 of the hollow interior of the coupling member 230. The hollow interior of the coupling member 230 may also be referred to as a bore.

The shaft 160 is adapted to be inserted into the hollow interior of the coupling member 230. The shaft 160 includes a rearward portion 260 and a forward portion 262. The rearward portion 260 may, for example, extend into the bearing housing 170. The forward portion 262 (e.g., forward portion) extends axially from the rearward portion 260 to a forward end 264 of the shaft 160. The forward portion 262 has a smaller diameter than the rearward portion 260 with a shoulder 266 extending radially therebetween.

The forward portion 262 is adapted to be inserted into and/or mated with the hollow interior of the coupling member 230. For example, the forward portion 262 of the shaft 160 includes a first subportion 262a that corresponds to the first portion 254 of the hollow interior of the coupling member 230 and a second subportion 262b that extends axially away (i.e., in a forward direction) from the first subportion 262a and corresponds to the second portion 256.

The first subportion 262a includes an outer profile corresponding to the interior profile of the first portion 254 of the coupling member 230. For example, the outer profile of the first subportion 262a may be cylindrical with a diameter that is slightly smaller than a diameter corresponding to the interior profile of the first portion 254 of the coupling member 230. The slightly smaller diameter of the first subportion 262a of the forward portion 262 of the shaft 160 allows receipt of the forward portion 262 in the coupling member 230 and may also prevent relative radial movement (e.g., wobbling) therebetween.

The second subportion 262b of the forward portion 262 of the shaft 160 corresponds to the second portion 256 of the hollow interior of the coupling member 230. The second subportion 262b may be substantially cylindrical with exterior threads that correspond to and are received by interior threads of the second portion 256 of the coupling member 230. The threads are represented schematically by the second subportion 262b being shown with a larger outer diameter than an inner diameter of the second portion 256 of the coupling member.

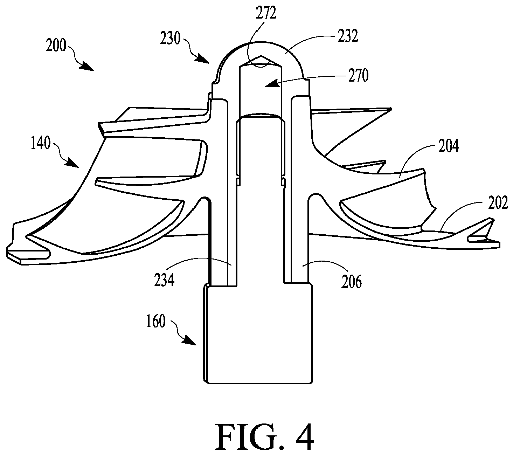

Referring to FIGS. 4-5, the coupling member 230 seats against the shaft 160. For example, a rearward end 245 of the coupling member 230 may seat against the shoulder 266 that extends radially between the rearward portion 260 and the forward portion 262 of the shaft 160. More particularly, the body portion 234 of the coupling member 230 includes an axial length that, relative to an axial length of the bore 208, allows the rearward end 245 of the body portion 234 to engage the shoulder 266. The axial length of the body portion 234 is measured between the planar rear surface 244 of the head portion 232 and the rearward end 245, while the axial length of the bore 208 is measured between the forward end 216 and the rearward end 218 thereof. The axial length of the body portion 234 may, as shown, be equal to the axial length of the bore 208. Thus, as the forward portion 262 of the shaft 160 is threaded to the second portion 256 in the hollow interior of the coupling member 230, the rearward end 245 is drawn toward and mates against the shoulder 266 of the shaft 160. Alternatively, the axial length of the body portion 234 may be slightly greater than the axial length of the bore 208 in which case the compressor wheel 140 is slightly axially compressed between the head portion 232 of the coupling member 230 and the shoulder 266 of the shaft 160, while still allowing the rearward end 245 of the coupling member 230 to engage the shoulder 266 of the shaft 160 from the threaded engagement therebetween.

In a still further alternative, the rearward end 245 of the coupling member 230 is axially spaced apart from the shoulder 266 of the shaft 160 in which case the axial length of the bore 208 is greater than the axial length of the body portion 234 of the coupling member 230. As a result, the compressor wheel 140 may be compressed axially between the head portion 232 of the coupling member 230 and the shoulder 266 of the shaft 160 from the threaded engagement between the coupling member 230 and the shaft 160.

Furthermore, an axial length of the forward portion 262 of the shaft 160 and an axial length of the hollow interior of the coupling member 230 are cooperatively configured for the coupling member 230 and/or the compressor wheel 140 to seat against the shaft 160. For example, in embodiments in which the coupling member 230 seats against the shaft 160, the axial length of the hollow interior of the coupling member 230 is greater than the axial length of the distal end 26t2 of the shaft 160. As a result, the forward portion 262 of the shaft 160 does not bottom out in the hollow interior of the coupling member 230.

The coupling member 230 and the shaft 160 may also be configured, such that an axial gap 270 (e.g., void) is formed between the forward end 264 of the shaft 160 and an end surface 272 (e.g., interior end surface) of the hollow interior of the coupling member 230. For example, the hollow interior of the body portion 234 may extend axially forward of the forward end 216 of the compressor wheel 140, while the forward end 264 of the shaft 160 terminates rearward of the forward end 216 of the compressor wheel 140. By not extending to the end surface 272, the shaft 160 may have less mass (e.g., provide weight relief) than a shaft extending entirely therethrough.

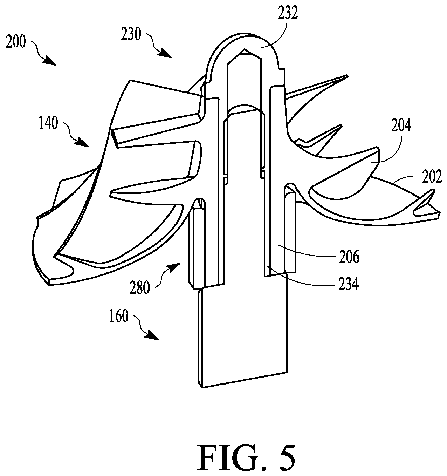

Referring to FIG. 5, the compressor wheel assembly 200 may additionally include a collar 280. The collar 280 is configured to prevent deformation of the shaft coupling portion 206 of the compressor wheel 140, for example, as torque is transferred thereto from the coupling member 230 and/or centrifugal force acts on thereon. The collar 280 is made from a stronger (e.g., stiffer) material than the polymeric material forming the compressor wheel 140. For example, the collar 280 may be formed of a metal, plastic, or other suitable material. The collar 280 includes a generally cylindrical profile and includes a bore 282 extending from a first end 284 of the collar 280 to a second end 286 of the collar 280. The bore 282 is adapted to receive a portion of the compressor wheel 140 and, in particular, the shaft coupling portion 206 thereof. The bore 282 of the collar 280 includes an interior diameter adapted to receive and tightly engage the shaft coupling portion 206 of the compressor wheel 140. As such, the collar 280 is disposed around and engages the shaft coupling portion 206, and further surrounds the coupling member 230 and/or the shaft 160.

During operation of the turbocharger 100, as the shaft 160 is rotated and torque is transferred to the coupling member 230 and, thereby, to the shaft coupling portion 206, the compressor wheel 140 may be susceptible to deformation (e.g., distortion) as the coupling member 230 applies force against polymeric material forming the shaft coupling portion 206 to accelerate the compressor wheel 140. Deformation may also occur from centrifugal force acting on the shaft coupling portion 206 as the compressor wheel 140 is rotated at high rotational speeds. The collar 280, by tightly engaging the shaft coupling portion 206 and being radially outward (e.g., concentric with) the coupling member 230, is adapted to limit and/or prevent such deformation. For example, the collar 280 provides mechanical support to the shaft coupling portion 206 to limit radially outward movement of the polymeric material forming the shaft coupling portion 206.

As used herein, the terminology "or" is intended to mean an inclusive "or" rather than an exclusive "or". That is, unless specified otherwise, or clear from context, "X includes A or B" is intended to indicate any of the natural inclusive permutations. That is, if X includes A; X includes B; or X includes both A and B, then "X includes A or B" is satisfied under any of the foregoing instances. In addition, the articles "a" and "an" as used in this application and the appended claims should generally be construed to mean "one or more" unless specified otherwise or clear from context to be directed to a singular form.

Further, for simplicity of explanation, although the figures and descriptions herein may include sequences or series of steps or stages, elements of the methods disclosed herein may occur in various orders or concurrently. Additionally, elements of the methods disclosed herein may occur with other elements not explicitly presented and described herein. Furthermore, not all elements of the methods described herein may be required to implement a method in accordance with this disclosure. Although aspects, features, and elements are described herein in particular combinations, each aspect, feature, or element may be used independently or in various combinations with or without other aspects, features, and elements.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A compressor wheel assembly (200), comprising:
a compressor wheel (140) formed of a polymeric material, the compressor wheel (140) comprising a hub (202), blades (204) extending from a forward surface (210) of the hub (202), and a shaft coupling portion (206) extending axially rearward from a rearward surface of the hub (202), wherein the shaft coupling portion(206) includes a bore (208) extending therethrough and having a polygonal cross-sectional configuration; and
a coupling member (230) having a head (232) and a body (234) extending axially from the head (232), wherein the head (232) is received against a forward end (216) of the compressor wheel (140) and the body (234) extends through the bore (208), and the body (234) has another polygonal cross-sectional configuration for transferring torque from the coupling member (230) to the compressor wheel (140).

2. The compressor wheel assembly (200) according to claim 1, wherein the polygonal cross-sectional configuration of the bore (208) and the other polygonal cross-sectional configuration of the body (234) are square.

3. The compressor wheel assembly (200) according to claim 1, wherein the bore (208) includes interior surfaces (220) that are straight and interior curved surfaces extending therebetween to form the polygonal cross-sectional configuration, and the body (234) includes exterior surfaces (240) that are straight and exterior curved surfaces extending therebetween to form the other polygonal cross-sectional configuration.

4. The compressor wheel assembly (200) according to claim 1, wherein the polygonal cross-sectional configuration extends an axial length of the bore (208), and the other polygonal cross-sectional configuration extends another axial length of the body (234), wherein the other axial length of the bore (208) is greater than or equal to the axial length of the body (234).

5. The compressor wheel assembly (200) according to claim 1, wherein the coupling member (230) is formed of a material that is stiffer than the polymeric material.

6. The compressor wheel assembly (200) according to claim 1, further comprising,
a shaft (160);
wherein the body (234) of the coupling member (230) includes a hollow interior; and
wherein the shaft (160) includes a forward portion (262) that is threadably received in the hollow interior to couple the shaft (160) to the coupling member (230) and transfer torque thereto as the shaft (160) is rotated by a drive source.

7. The compressor wheel assembly (200) according to claim 6, wherein the shaft (160) includes a rearward portion (260) having a diameter that is larger than a diameter of the forward portion (262) and from which the forward portion (262) extends forward axially, and a rearward end (238) of the coupling member (230) seats against a shoulder (266) extending radially between the rearward portion (260) and the forward portion (262).

8. The compressor wheel assembly (200) according to claim 6, wherein the forward portion (262) is received by the hollow interior to couple the shaft (160) to the coupling member (230), and a void (270) is formed axially between an interior end surface (272) of the body (234) and a forward end (264) of the shaft (160).

9. The compressor wheel assembly (200) according to claim 8, wherein the hollow interior of the body (234) extends axially forward of the forward end (216) of the compressor wheel (140), and the forward end (264) of the shaft (160) terminates rearward of the forward end (216) of the compressor wheel (140).

10. The compressor wheel assembly (200) according to claim 6, further comprises a collar (280) disposed around and engages the shaft coupling portion (206), and the collar (280) is formed of a material that is stiffer than the polymeric material.

11. The compressor wheel assembly according to claim 10, wherein the collar (280) surrounds the coupling member (230).

12. A compressor wheel assembly (200) comprising:
a compressor wheel (140) formed of a polymeric material, the compressor wheel (140) comprising a hub (202), blades (204) extending from a forward surface (210) of the hub (202), and a shaft coupling portion (206) extending axially rearward from a rearward surface of the hub (202); wherein the shaft coupling portion (206) includes a bore (208) extending therethrough and having a polygonal cross-sectional configuration:
a coupling member (230) formed of a material stiffer than the polymeric material and having a head (232) and a body (234) extending axially from the head (232) and having a hollow interior, wherein the head (232) is received against a forward end (216) of the compressor wheel (140) and the body (234) extends through the bore (208), and the body (234) has another polygonal cross-sectional configuration for transferring torque from the coupling member (230) to the compressor wheel (140); and
a shaft (160) having a forward portion (262) that is threadably received in the hollow interior to couple the shaft (160) to the coupling member (230) and transfer torque thereto as the shaft is (160) rotatably driven.

13. The compressor wheel assembly (200) according to claim 12, wherein the polygonal cross-sectional configuration of the bore (208) and the body (234) are square or comprise straight and curved surfaces.

14. The compressor wheel assembly (200) according to claim 12, further comprising a collar (280) disposed around and engaging the shaft coupling portion (206) wherein the collar (280) is formed of a material that is stiffer than the polymeric material.

15. The compressor wheel assembly (200) according to claim 12, wherein the polygonal cross-sectional configuration extends an axial length of the bore (208), and the other polygonal cross-sectional configuration extends another axial length of the body (234), wherein the other axial length of the bore (208) is greater than or equal to the axial length of the body (234).
